**Europäisches Patentamt**

**European Patent Office**

**Office européen des brevets**

(19)

(11) Veröffentlichungsnummer: **0 073 349**
**B1**

(12) **EUROPÄISCHE PATENTSCHRIFT**

(45) Veröffentlichungstag der Patentschrift:
20.03.85

(51) Int. Cl.⁴: **B 65 G 67/06**

(21) Anmeldenummer: **82106887.1**

(22) Anmeldetag: **30.07.82**

(54) **Beladevorrichtung.**

(30) Priorität: **28.08.81 DE 3134011**

(43) Veröffentlichungstag der Anmeldung:
**09.03.83 Patentblatt 83/10**

(45) Bekanntmachung des Hinweises auf die Patenterteilung:
**20.03.85 Patentblatt 85/12**

(84) Benannte Vertragsstaaten:
**AT BE CH DE FR GB IT LI NL SE**

(56) Entgegenhaltungen:
**DE - A - 2 716 640**
**DE - A - 2 821 210**
**US - A - 4 061 221**

(73) Patentinhaber: **Stanelle, Karl-Heinz, Rosenstrasse 4,
D-7129 Güglingen 2 (DE)**

(72) Erfinder: **Stanelle, Karl-Heinz, Rosenstrasse 4,
D-7129 Güglingen 2 (DE)**

(74) Vertreter: **Hach, Hans Karl, Dr., Tarunstrasse 23,
D-6950 Mosbach-Waldstadt (DE)**

# Beschreibung

Die Erfindung betrifft eine Beladevorrichtung für rieselförmiges Schüttgut mit einem oberen Einfüllstutzen, mit einem ein- und ausfahrbaren Fallschacht, in den der Einfüllstutzen mündet und der in einen Trichter eines Auslaufs mündet; mit auf die Höhe des Fallschachtes verteilt angeordneten Trichtern, die sich nach unten verjüngen, den Fallschacht bilden, mit dem Trichter des Auslaufs ineinanderstecken und an Ketten aufgehängt sind, und mit einem ringförmigen, den Fallschacht koaxial umgebenden Absaugkanal, dessen Aussenwand ein den Trichter des Auslaufs umgebendes ringförmiges Abschlusselement des Auslaufs und ein sich vom oberen Rand dieses Abschlusselementes bis zum oberen Einfüllstutzen erstreckender Faltenbalg 75 ist, und mit einem Absaugstutzen, der oben in den Abzugskanal mündet.

Aus der US-PS Nr. 4061221 ist eine Beladevorrichtung der eingangs gennanten Art bekannt, bei der der Auslauf beim Entladen über einer horizontalen Fläche steht, auf der sich das auslaufende Schüttgut aufhäuft.

Wenn ein Behälter duch eine Einfüllöffnung beladen werden soll, dann muss der Auslauf auf der Einfüllöffnung sitzen. Wenn es sich dabei um einen Kesselwagen handelt, dann senkt sich diese Öffnung mit fortschreitender Beladung durch das zunehmende Gewicht, dem muss der Auslauf dann folgen können. Das durch einfache Massnahmen sicherzustellen ist Aufgabe der Erfindung.

Die Erfindung ist dadurch gekennzeichnet, dass ein Seilzug vorgesehen ist, dessen Zugseile abgestütz über je eine Druckfeder am Auslauf eingehängt sind, dass der Antriebsmotor und die Umlenkrollen des Seilzuges oberhalb des Fallschachtes angeordnet sind, und dass die Druckfedern gewichtsentlastet sich über ein Wegstück von 2 bis 30 cm expandieren, und dass ein Taster vorsehen ist, der bei abwärts laufendem Seilzug den Antriebsmotor abschaltet, sobald die Zugseile entlastet sind.

Bei Beginn der Beladung sitzt der Auslauf auf der Einfüllöffnung und die Druckfedern sind expandiert, ehe der Antrieb einschaltet. Senkt sich nun die Einfüllöffnung, dann kann der Auslauf dem folgen, indem er durch ein Gewicht die expandierten Druckfedern zusammendrückt. Die Zugseile bleiben dabei gespannt, mindestens unter der Kraftwirkung der expandierten Druckfeder.

Es ist wünschenswert, die Antriebsteile des Seilzugs in einem Gehäuse unterzubringen und dieses möglichst klein auszubilden. Eine dementsprechende Ausgestaltung der Erfindung ist dadurch gekennzeichnet, dass oberhalb des Faltenbalges ein Kopfkasten vorgesehen ist, der einen rechteckigen Grundriss hat, der den kreisförmigen Grundriss des Faltenbalges eng umgibt, und unten durch einen Deckel verschlossen ist, der von dem Einfüllstutzen durchsetzt wird, dass der Antriebsmotor und die Umlenkrollen des Seilzuges in dem Kopfkasten angeordnet sind, und dass zwei Zugseile des Seilzuges vorgesehen sind, die ausserhalb des Faltenbalges verlegt sind und von denen das eine in der einen Ecke des Kopfkastens und das andere in der diametral gegenüberliegenden Ecke geführt ist.

Bei einem quadratischen Grundriss des Kopfkastens erstrecken sich alle vier Seiten etwa entlang von Tangenten an dem kreisförmigen Grundriss des Faltenbalges. Bei deinem rechteckigen Grundriss erstrecken sich drei Seiten des Kopfkastens entlang solcher Tangenten, während die vierte Seite weiter herausragt, beispielsweise um Platz zu schaffen für die Aufnahme eines Antriebsmotors für den Seilzug, sofern dieser nicht innerhalb des quadratischen Kastens untergebracht werden kann. Ein Kopfkasten mit quadratischem Grundriss ist wegen des geringeren Platzbedarfs bevorzugt.

Es ist wünschenswert, die Absaugöffnung des äusseren Trichters bei eingefahrenem Fallschacht zu schliessen, damit durch diese Öffnung nicht unnötog Luft angesaugt wird. Dem wird eine besondere Ausgestaltung der Erfindung gerecht, die dadurch gekennzeichnet ist, dass ein Schliesskegel für die Absaugöffnung des äusseren Trichters und die Mündung des Fallschachtes vorgesehen ist, der an einer innerhalb des Fallschachtes angeordneten Zugvorrichtung hängt, die aus mehreren an verschiedenen Trichtern befestigten zu einer mit einer Umlenkrolle ausgestatteten Seilzugvorrichtung gehörigen Teilen besteht und bei eingefahrenem Fallschacht den Schliesskegel in Schliessstellung anhebt und bei ausgefahrenem Fallschacht in Offenstellung absenkt. Nach dieser Ausgestaltung wird mit der Absaugöffnung auch die Mündung des Fallschachtes verschlossen, so dass dort auch keine Schüttgutreste mehr abfallen können. Bemerkenswert ist bei dieser Weiterbildung, dass der Schliesskegel bei ausgefahrenem Fallschacht auch passiv in seine Schliessstellung angehoben werden kann, zum Beispiel wenn er auf der Füllhöhe einer bereits angeschütteten Schüttgutmasse aufsetzt.

Die Erfindung wird nun anhand der beigefügten Zeichnung näher erläutert.

In der Zeichnung zeigt:

Fig. 1 in Seitenansicht eine Beladevorrichtung bei ausgefahrenem Fallschacht,

Fig. 2 die durch die strichpunktierte Linie II aus Fig. 1 umfahrene Einhängung für das Zugseil, und zwar unter a) beim Ausfahren, unter b) am Ende der Ausfahrbewegung, während der Taster anspricht, und unter c) nach erfolgtem Nachrücken des Auslaufs infolge Absenkens der Einfüllöffnung,

Fig. 3 die Ansicht aus Fig. 1 mit dem Auslauf und dem Faltenbalg im Längsschnitt,

Fig. 4 den Querschnitt gemäss dem Pfeil IV aus Fig. 3,

Fig. 5 die Vorrichtung aus Fig. 1 eingefahren, Auslauf und Faltenbalg geschnitten wie in Fig. 3,

Fig. 6 stilisiert die Vorrichtung aus Fig. 1 in Funktion,

Fig. 7 ein weiteres Ausführungsbeispiel im Querschnitt, bei eingefahrenem Fallschacht, und

Fig. 8 den unteren Teil aus Fig. 7 jedoch in ausgefahrenem Zustand.

In der Zeichnung ist mit 1 der Kopfkasten bezeichnet, der einen oberen Anschlagflansch 2 und dem gegenüber unter einen Deckel 3 und einen den Anschlagflansch 2 und den Deckel 3 vertikal durchsetzenden Einfüllstutzen 4 aufweist. Innerhalb des Kopfkastens ist eine Abteilung 5 durch zwei Seitenwände 6 und 7 luftdicht abgetrennt. In diese Abteilung 5 mündet eine Öffnung 8 im Deckel 3 und ein seitlich angesetzter Absaugstutzen 9. Innerhalb des Kopfkastens 1 ist ein allgemein mit 10 bezeichneter Seilzug untergebracht, zu dem ein Getriebemotor 11 und von diesem angetriebene Seiltrommeln, 12, 13 mit Umlenkrolle 14 gehört. Der Getriebemotor 11 weist eine bei Stromabschaltung ansprechende Bremse auf und wird durch einen Taster 22 angesteuert, der den eingeschalteten Antriebsmotor abschaltet, wenn die Belastung durch die Zugseile einen vorgegebenen, für eine hinreichende Seilspannung ausreichenden Wert unterschreitet.

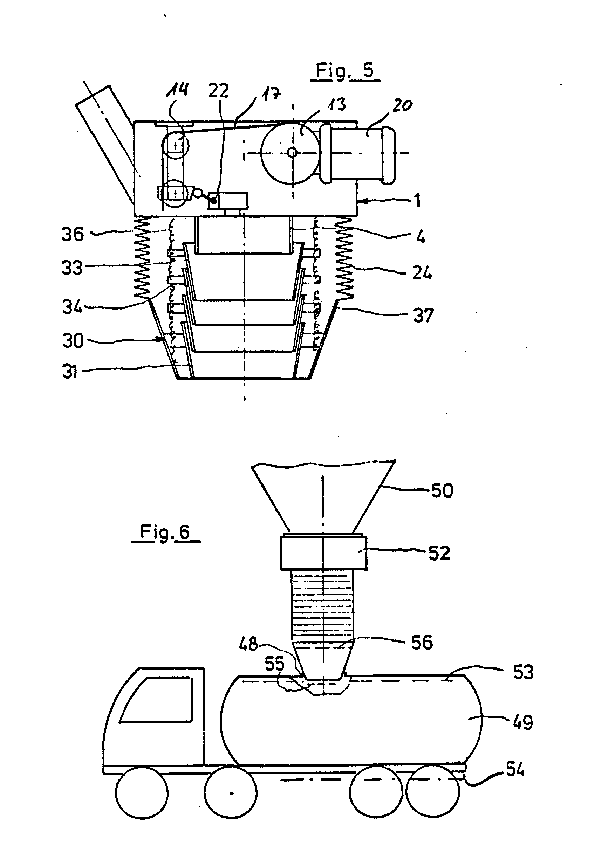

Der Kopfkasten 1 hat, wie aus Fig. 4 ersichtlich, quadratischen Grundriss und die beiden Zugseile 16, 17 sind an gegenüberliegenden Ecken 18, 19 durch den Deckel 3 nach unten geführt.

Für den Fall eines grösseren Getriebemotors 11, der nicht innerhalb des quadratischen Kastens unterzubrigen ist, wie durch die gestrichelte Zusatzkontur 20 angedeutet, ragt entweder ein Teil des Motorgehäuses aus dem Kopfkasten 1 heraus oder der Kopfkasten ist, wie durch die gestrichelte Kontur 2 angedeutet, auf eine rechteckige Kontur vergrössert.

Unten an dem Kopfkasten 1 ist ein Faltenbalg 24 angehängt, der kreisrunden Querschnitt hat, wie in Fig. 4 gestrichelt eingezeichnet. Die Seitenwände 26, 27, 28, 29 des Kopfkastens umgeben eng den kreisrunden Querschnitt des Faltenbalges 24, erstrecken sich also etwa entlang von Tangenten an dem kreisrunden Grundriss des Faltenbalges.

Unten an dem Faltenbalg 24 hängt ein Auslauf 30, der einen zum Einfüllstutzen koaxialen, nach Art eines Trichters geformten Auslaufstutzen 31 aufweist, der von einem äusseren Trichter 32 umgeben ist. Zwischen dem Einfüllstutzen 4 und dem Auslaufstutzen 31 sind mit Abstand zueinander zwei Trichter 33, 34 koaxial zur Mittelachse 35 von Einfüllstutzen 4 und Auslaufstutzen 31 an zwei diametral einander gegenüber angeordneten Ketten 36, 37 aufgehängt. Die Ketten 36, 37 hängen am Deckel 3 und am unteren Ende der Ketten hängt der Auslauf 30 mit dem trichterförmigen Auslaufstutzen 31. Die Ketten 36, 37 sind so lang wie der maximal gewünschten Ausziehung des Faltenbalges 24 entspricht. Durch die Ketten ist sichergestellt, dass der Faltenbalg 24 nicht übermässig ausgezogen wird.

Zwischen dem äusseren Trichter 32 und dem Auslaufstutzen 31 ist ein ringförmiger Absaugkanal 40 ausgespart, der von einer ringförmigen, die Mündung 41 des Fallschachtes 42 umgebenden Absaugöffnung 43 ausgeht und sich, wie durch Pfeile angedeutet, innerhalb des Faltenbalges 24 fortsetzt und durch die Öffnung 8 und die Abteilung 5 zum Absaugstutzen 9 führt, an den eine nicht dargestellte Absaugvorrichtung angeschlossen ist. Durch diesen Absaugkanal 40 wird die durch nachfliessendes Schüttgut verdrängte Luft abgesaugt, die im Faltenbalg 24 ringförmig um den durch die Trichter 33, 34 gebildeten Fallschacht 42 nach oben strömt, während das von dem Einfüllstutzen 4 eingefüllte Schüttgut im Zentrum, zentriert durch die Trichter 33, 34, nach unten fällt.

In eingezogenem Zustand passen die Trichter 33, 34 ineinander und in den trichterförmig geformten Auslaufstutzen 31.

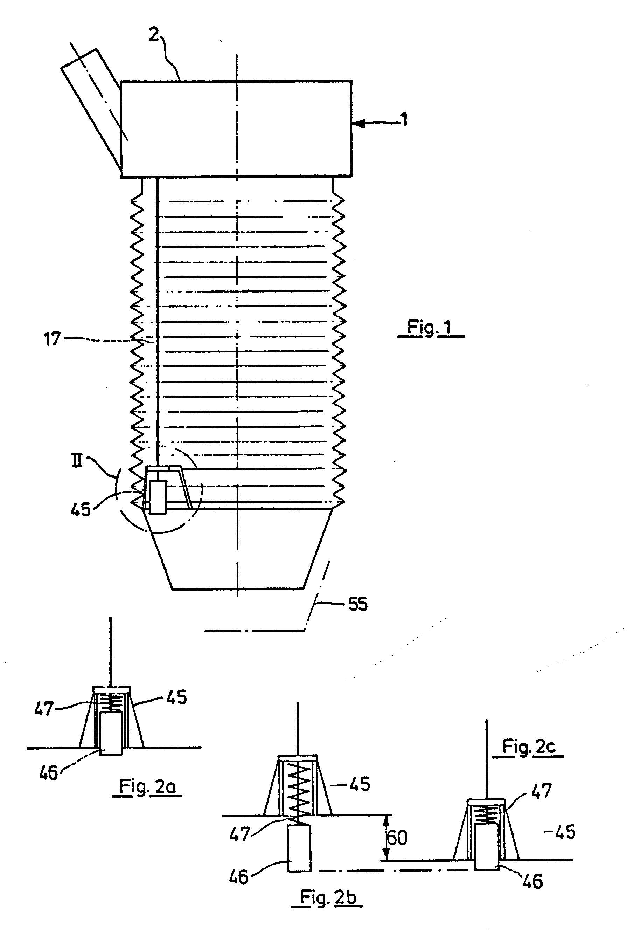

Der Auslauf 30 hängt an den beiden diametral einander gegenüberliegenden Zugseilen 16, 17. Nur das Zugseil 17 ist in Fig. 1 sichtbar. Das freie Ende des Zugseils 17 ist an einem am oberen Rand des Auslaufs befestigten Bügel 45 eingehängt. Am freien Ende des Zugseils ist ein Rohrstück 46 aufgeklemmt, das sich unter Zwischenschaltung einer auf das Seil aufgesteckten Druckfeder 47 auf dem Bügel 45 abstützt. Der Bügel 45 weist ein nicht dargestelltes Loch auf, durch das das Zugseil hindurchgeführt ist. Das Zugseil 16 ist genauso eingehängt und wirt auch genauso wie das Zugseil 17.

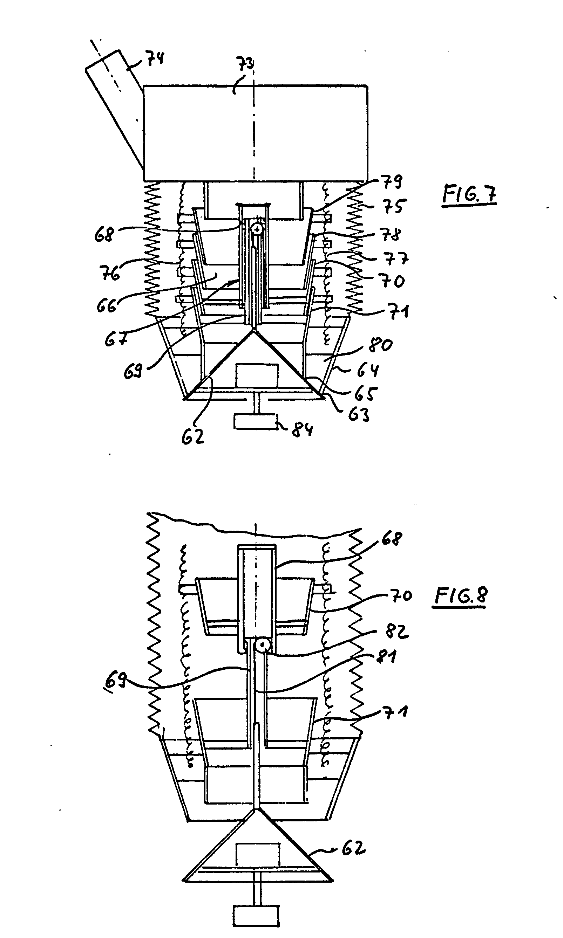

Während der Auslauf aus der in Fig. 5 gezeichneten Stellung durch den Seilzug nach unten gefahren wird, sind die Druckfedern 47, wie aus Fig. 2 ersichtlich, durch das Gewicht des Auslaufs vollständig zusammengedrückt. Sobald der Auslauf, zum Beispiel wie aus Fig. 6 ersichtlich, auf dem Rand der Einfüllöffnung 48 eines zu füllenden Kesselwagens 49 aufsetzt, wird die Abwärtsbewegung des Auslaufs beendet und die Druckfedern 47 werden entlastet. Sie expandieren sich dadurch, bis infolge zunehmendem Nachlassens des Seilzuges der Taster 22 anspricht und den Antriebsmotor 11 abschaltet und dabei dessen Bremse aktiviert. Nun kann das Schüttgut aus einem Vorratsbehälter 50, an dessen Auslauföffnung 51 unten der Kopfkasten 52 angeflanscht ist, durch den Fallschacht nach unten in die Einfüllöffnung 48 fliessen. Dabei wird das herunterrieselnde Schüttgut durch die Trichter auf das Zentrum das Fallschachtes zentriert und daran gehindert, in den Bereich der nach oben strömenden Absaugluft zu geraten.

Mit zunehmender Befüllung des Kesselwagens 49 senkt sich dieser ab, wie durch die strichpunktierten Linien 53, 54 in Fig. 6 angedeutet. Dem kann der Auslauf folgen, wie durch die strichpunktierten Linien 55, 56 angedeutet, über ein Wegstück gemäss Doppelpfeil 60 aus Fig. 2b, bis die Druckfedern 47 vollständig zusammengedrückt sind, wie in Fig. 2c dargestellt. Die Fig. 2a, b und c sind in vergleichbarer Höhenlage gezeichnet.

Die durch die Druckfedern 47 in Verbindung mit dem Taster 22 gebotene Nachrückmöglichkeit ist begrenzt durch das Wegstück gemäss Doppelpfeil 60. Dieses Wegstück kann durch entsprechend bemessene Federn für alle Anwendungsfälle hinreichend lang sein. Ein selbsthemmender Getriebemotor ohne Bremse anstelle des Getriebemotors 11 würde zwar auch eine Nachrückmöglichkeit bieten, diese wäre dann aber nicht entsprechend Doppelpfeil 60 begrenzt. Das kann sehr nachteilige Folgen haben, wenn man in Betracht zieht, dass bei Betrieb einer solchen Vorrichtung an der Vorrichtung oder in der Umgebung Erschütterungen auftreten, durch die die Selbsthemmung des Getriebes unerwünscht überwunden werden kann.

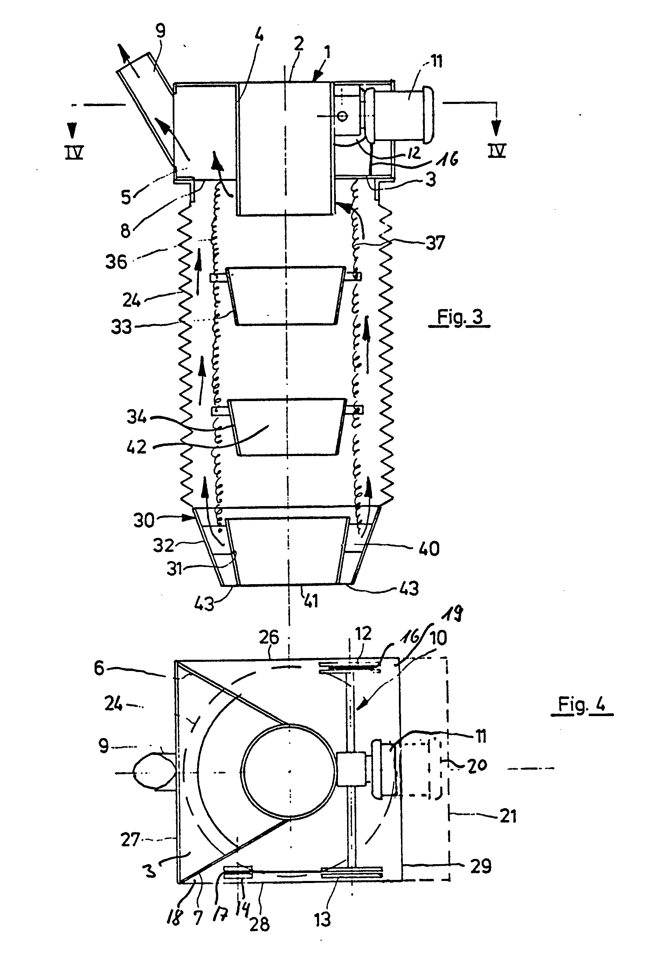

Gemäss Fig. 7 und 8 sind mit 73 der Kopfkasten, mit 74 ein Absaugstutzen, mit 75 ein Faltenbalg, mit 76 und 77 zwei Ketten, mit 70, 71, 78 und 79 Trichter, die den Fallschacht 66 bilden und mit 64 der chäussere Trichter bezeichnet, dessen Absaugöffnung 63 zu dem Absaugkanal 80 gehört. Soweit ist das Ausführungsbeispiel nach Fig. 7 und 8 im wesentlichen genauso ausgebildet, wie das Ausführungsbeispiel nach Fig. 3 und 4 und wird auch in entsprechender Weise betrieben. Zusätzlich ist bei diesem Ausführungsbeispiel eine Zugvorrichtung 67 vorgesehen, die innerhalb des Fallschachtes 66 angeordnet ist und aus zwei Teilen, nämlich dem Teil 68 und dem Teil 69 besteht. Die beiden Teile gehören zu einem Seilzug, dessen Teil 81 über eine am Teil 69 gelagerte Umlenkrolle 82 läuft. Die Beiden Teile sind, wie in Fig. 8 dargestellt, teleskopartig auseinandergezogen wenn der Fallschacht auseinandergezogen ist, dagegen sind die beiden Teile, wie in Fig. 7 dargestellt, zusammengezogen wenn der Fallschacht nach oben eingezogen ist. Das Teil 68 ist in dem Trichter 70 und das Teil 67 darunter in dem Trichter 71 befestigt, so dass die Teile sich teleslopartig auseinanderschieben beziehungsweise zusammenschieben, wenn der Fallschacht ein- beziehungsweise ausgefahren wird. An dem Seil 81 hängt ein Schliesskegel 62, der bei eingezogenem Fallschacht gemäss Fig. 7 die Absaugöffnung 63 und die Mündung 65 des Fallschachtes verschliesst, dagegen bei ausgefahrenem Fallschacht gemäss Fig. 8 in eine Offenstellung abgesenkt ist, in der er das Ansaugen der Luft und das Abfallen des Schüttgutes nicht behindert. Der Schliesskegel 62 überragt in seiner Kontur nur unwesentlich den Rand der Absaugöffnung, so dass er das Einführen des äusseren Trichters 64 in eine entsprechende Einfüllöffnung 48 aus Fig. 6 nicht behindert. An dem Schliesskegel 62 kann ein Füllstandsfühler 84 gelagert sein.

**Patentansprüche**

1. Beladevorrichtung für rieselfähiges Schüttgut mit einem oberen Einfüllstutzen (4), mit einem ein- und ausfahrbaren Fallschacht (42), in den der Einfüllstutzen mündet und der in einen Trichter (31) eines Auslaufs (30) mündet, mit auf die Höhe des Fallschachtes verteilt angeordneten Trichtern (33, 34), die sich nach unten verjüngen, den Fallschacht (42) bilden, mit dem Trichter (31) des Auslaufs (30) ineinanderstecken und an Ketten (36, 37) aufgehängt sind, und mit einem ringförmigen, den Fallschacht (42) koaxial umgebenden Absaugkanal (40), dessen Aussenwand ein den Trichter (31) des Auslaufs (30) umgebendes ringförmiges Abschlusselement (32) des Auslaufs (30) und ein sich vom oberen Rand dieses Abschlusselementes bis zum oberen Einfüllstutzen erstreckender Faltenbalg (75) ist, und mit einem Absaugstutzen (9), der oben in den Abzugskanal (40) mündet, dadurch gekennzeichnet, dass ein Seilzug (10) vorgesehen ist, dessen Zugseile (16, 17) abgestützt über je eine Druckfeder (47) am Auslauf (30) eingehängt sind, dass der Antriebsmotor (11) und die Umlenkrollen (14 und 15) des Seilzuges (10) oberhalb des Fallschachtes angeordnet sind, und dass die Druckfedern (47) gewichtsentlastet sich über ein Wegstück (60) von 2 bis 30 cm expandieren, und dass ein Taster (22) vorgesehen ist, der bei abwärts laufendem Seilzug (10) den Antriebsmotor (11) abschaltet, sobald die Zugseile (16, 17) entlastet sind.

2. Beladevorrichtung nach Anspruch 1, dadurch gekennzeichnet, dass oberhalb des Faltenbalges ein Kopfkasten (1) vorgesehen ist, der einen rechteckigen Grundriss hat, der den kreisförmigen Grundriss des Faltenbalges (24) eng umgibt, und unten durch einen Deckel (3) verschlossen ist, der von dem Einfüllstutzen (4) durchsetzt wird, dass der Antriebsmotor (11) und die Umlenkrollen (14, 15) des Seilzuges (10) in dem Kopfkasten (1) angeordnet sind, und dass zwei Zugseile (16, 17) des Seilzuges (10) vorgesehen sind, die ausserhalb des Faltenbalges (24) verlegt sind und von denen das eine in der einen Ecke des Kopfkastens und das andere in der diametral gegenüberliegenden Ecke geführt ist.

3. Vorrichtung nach einem der vorhergehenden Ansprüche, dadurch gekennzeichnet, dass der Deckel (3) eine in das Innere des Kopfkastens (1) mündende Öffnung (8) für den Absaugkanal (40) aufweist, die in eine luftdicht getrennte Abteilung (5) des Kopfkastens (1) führt und von da an einen Absaugstutzen (9).

4. Vorrichtung nach einem der vorhergehenden Ansprüche, dadurch gekennzeichnet, dass das Abschlusselement (32) des Auslaufs (30) ein sich nach unten verengender Trichter ist.

5. Vorrichtung nach einem der vorgehenden Ansprüche, dadurch gekennzeichnet, dass ein Schliesskegel (62) für die Absaugöffnung (63) des Abschlusselementes (64) und die Mündung (65) des Fallschachtes (66) vorgesehen ist, der an dem Seilzug (67) hängt, und durch den Seilzug bei eingefahrenem Fallschacht in Schliessstellung angehoben und bei ausgefahrenem Fallschacht in Öffnungsstellung abgesenkt ist.

**Claims**

1. Loading apparatus for free-flowing bulk material with an upper filling connection (4), with an insertable and removable drop chute (42) into which issues the filling connection and which opens into a hopper (31) of an outlet (30), with hoppers (33, 34) distributed over the height of the drop chute and which taper downwards to form said drop chute (42), are telescoped with the hopper (31) on the outlet (30) and are suspended on chains (36, 37), whilst there is an annular exhaust duct (40) coaxially surrounding the drop chute (42) and whose outer wall is an annular terminal element (32) of the outlet (30) surrounding the hopper (31) of the latter and a bellows (75) extending from the upper edge of said terminal element to the upper filling connection, as well as with a suction connection (9) issuing at the top into the exhaust duct (40), characterized in that a cable line (10) is provided, whose load cable (16, 17) supported in each case by a compression spring (47) are suspended at outlet (30), that the drive motor (11) and the guide pulleys (14, 15) of cable line (10) are arranged above the drop chute and that in weight-relieved manner the compression springs (47) expand from 2 to 30 cm *via* a member (60) and that a probe (22) is provided which switches off the drive motor (11) when the cable line (10) is moving downwards as soon as the load cables (16, 17) are relieved.

2. Loading apparatus according to Claim 1, characterized in that a top box (1) is provided above the bellows and has a rectangular plan view, which closely embraces the circular plan view of the bellows (24) and is closed at the bottom by a cover (3), through which passes the filling connection (4), that the drive motor (11) and the guide pulleys (14, 15) of the cable line (10) are arranged in the top box (1) and that second cables (16, 17) of cable line (10) are provided and located outside bellows (24) and whereof one is guided in one corner of the top box and the other in the diametrically facing corner.

3. Apparatus according to one of the preceding claims, characterized in that the cover (3) has an opening (8) for the exhaust duct (40) issuing into the interior of the top box (1) and which leads into a compartment (5) of top box (1) separated in air-tight manner and from there to a suction connection (9).

4. Apparatus according to one of the preceding claims, characterized in that the terminal element (32) of outlet (30) is a downwardly tapering hopper.

5. Apparatus according to one of the preceding claims, characterized in that the closing cone (62) is provided for the suction opening (63) of terminal element (64) and the opening (65) of drop chute (66) which is suspended on the cable line (67) and which is raised into closed position by said cable line when the drop chute is introduced and is lowered into the open position when the drop chute is extended.

## Revendications

1. Dispositif de chargement de produit en vrac ruisselant en tombant, avec une tubulure supérieure de remplissage (4), avec un puits de descente rentrable et retirable (42) dans lequel débouche le tube de remplissage et qui débouche dans la trémie (31) d'une sortie (30), avec des trémies (33, 34) disposées de manière à être réparties sur la hauteur du puits de descente, lesquelles trémies se rétrécissent vers le bas, forment le puits de descente (42), s'emboîtent l'une dans l'autre avec la trémie (31) de la sortie (30) et sont suspendues à des chaînes (36, 37), à savoir un disposiif de chargement avec un canal annulaire d'aspiration (40) entourant coaxialement le puits de descente (42), canal dont la paroi extérieure est un élément annulaire de fermeture (32) [entourant la trémie (31) de la sortie (30)] et un soufflet (75) s'étendant du bord supérieur de cet élément de fermeture jusqu'à la tubulure supérieure de remplissage, à savoir un dispositif avec une tubulure d'aspiration (9) qui débouche en haut dans le canal de décharge (40), caractérisé par le fait qu'il est prévu une commande par câbles (10), dont les câbles de traction (16, 17) soutenus sont suspendus à la sortie (30) chaque fois par l'intermédiaire d'un ressort de pression (47), que le moteur de commande (11) et les galets de renvoi (14 et 15) de la commande par câbles (10) sont disposés au-dessus du puits de descente et que les resorts de pression, déchargés du poids qu'ils supportent, se détendent sur un bout de chemin (60) de 2 à 30 cm et qu'il est prévu un bouton-poussoir (22) qui met hors circuit le moteur de commande (11) lorsque la commande par câbles (10) se déplace vers le bas dès que les câbles de traction (16, 17) sont déchargés.

2. Dispositif de chargement conforme à la revendication 1, caractérisé par le fait que, au-dessus du soufflet, il est prévu un caisson de tête (1) qui, en projection horizontale, est un rectangle entourant étroitement la projection horizontale circulaire du soufflet (24), lequel caisson est fermé en bas par un couvercle (3) traversé par une tubulure (4) de remplissage, que le moteur de commande (11) et les galets de renvoi (14, 15) de la commande par câbles (10) sont disposés dans le caisson de tête (1) et qu'il est prévu deux câbles de traction (16, 17) de la commande par câbles (10), lesquels câbles de traction sont posés à l'extérieur du soufflet (24), et que l'un de ceux-ci est conduit dans un angle du caisson de tête tandis que l'autre est conduit dans l'angle diamétralement opposé.

3. Dispositif conforme à l'une des revendications précédentes, caractérisé par le fait que le couvercle (3) présente une ouverture (8) débouchant à l'intérieur du caisson de tête (1) pour le canal d'aspiration (40), laquelle couverture conduit à un compartiment (5) (séparé de manière à être étanche à l'air) du caisson de tête (1) et de là à une tubulure d'aspiration (9).

4. Dispositif conforme à l'une des revendications précédentes, caractérisé par le fait que l'élément de fermeture (32) de la sortie (30) est une trémie se rétrécissant vers le bas.

5. Dispositif conforme à l'une des revendications précédentes, caractérisé par le fait qu'il est prévu un cône de fermeture (62) pour l'ouverture d'aspiration (63) de l'élément de fermeture (64) et le débouché (65) du puits de descente (66), lequel cône de fermeture est suspendu à la commande par câbles et soulevé par la commande par câbles pour être amené dans la position de fermeture lorsque le puits de descente est rentré, tandis qu'il est abaissé pour être amené dans la position d'ouverture, lorsque le puits de descente est sorti.

Fig. 1

Fig. 2a

Fig. 2b

Fig. 2c

Fig. 3

Fig. 4

Fig. 5

Fig. 6

FIG. 7

FIG. 8